# EUROPEAN PATENT SPECIFICATION

(11) **EP 3 295 407 B1**
(45) Date of publication and mention of the grant of the patent: **11.05.2022**
(21) Application number: 16815067.0
(22) Date of filing: 15.06.2016
(51) Int. Cl.: G06Q 30/00, H04N 21/24

(54) **SYSTEM AND METHOD FOR MULTIMEDIA PROMOTION AND CONTENT PRIORITIZATION**
SYSTEM UND VERFAHREN ZUR MULTIMEDIA-FÖRDERUNG UND INHALTSPRIORISIERUNG
SYSTÈME ET PROCÉDÉ DE PROMOTION MULTIMÉDIA ET DE PRIORISATION DE CONTENU

(30) Priority: 25.06.2015 US 201562184343 P; 16.03.2016 US 201615071802
(43) Date of publication of application: 21.03.2018
(73) Proprietor: Sony Group Corporation, Tokyo 108-0075 (JP); Crackle, Inc., Culver City, CA 90232 (US); Sony Pictures Entertainment, Inc., Culver City, CA 90232 (US)
(72) Inventor: RAMIREZ, Alejandro, Culver City, CA 90232 (US); FUNK, Natasha, San Diego, CA 92127 (US); ENRIQUEZ, Hiram, San Diego, CA 92127 (US); ACKERMAN, Diuliani, San Diego, CA 92127 (US); CHORDIA, Sandeep, Culver City, CA 90232 (US); LOPEZ, Diego, Culver City, CA 90232 (US)
(74) Representative: D Young & Co LLP
(86) International application number: PCT/US2016/037510
(87) International publication number: WO 2016/209675

(56) References cited:
- CN-A- 104 035 982
- US-A1- 2007 162 926
- US-A1- 2008 154 717
- US-A1- 2008 262 927
- US-A1- 2009 076 894
- US-A1- 2009 241 142
- US-A1- 2012 060 185
- US-A1- 2014 372 373

## Description

### CROSS-REFERENCE TO RELATED APPLICATIONS

This application claims benefit of priority of U.S. Patent Application 15/071,802, filed March 16, 2016, entitled " SYSTEM AND METHOD FOR MULTIMEDIA PROMOTION AND CONTENT PRIORITIZATION" which claims benefit of priority of U.S. Provisional Patent Application 62/184,343, filed June 25, 2015, entitled "CONTENT PRIORITIZATION.

### FIELD

The invention relates to promoting multimedia content such as movies and television shows, according the method and system for selecting assets corresponding to audiovisual content items for promotion as defined in the appended claims.

### BACKGROUND

Promotion of titles such as movies requires increasing sophistication as consumers are faced with a barrage of advertisements when the same are "surfing" the web or Internet. It is difficult to make a title "rise above the rest" in the eyes of today's consumers. While it is known to provide advertising directed towards a consumer, such is based on previously known tastes and choices of the consumer, and such efforts are generally not able to guess, estimate, or predict what the user would find interesting in the future. Prior art includes CN 104035982 A (which discloses a method and apparatus for recommending a multimedia resource), US 2014/372373 A1 (which discloses techniques for recommending media based on reference coefficients) and US 2012/060185 A1 (which discloses a method and apparatus for planning a schedule of multimedia advertisement across one or more broadcasting channels).

This Background is provided to introduce a brief context for the Summary and Detailed Description that follow. This Background is not intended to be an aid in determining the scope of the claimed subject matter nor be viewed as limiting the claimed subject matter to implementations that solve any or all of the disadvantages or problems presented above.

### SUMMARY

Systems, methods and preferred example embodiments according to the appended claims meet the needs of the above in several ways.

In particular, systems and methods according to the appended claims can use advertising metrics to select content items for promotion, such as movies, television shows, and the like. The metrics are used in formulas to produce coefficients which are in turn used for sorting and selecting audiovisual or multimedia content such as movies. For example, a group of seven movies may be selected for a "blitz" push during one week, one movie for each day. The movie for a day is promoted through a coordinated effort across multiple services, including online video services, video-on-demand services, and social media.

In one implementation, a computer system as defined in the claims evaluates the access and use of multiple assets and determines coefficients for the assets. Using the coefficients, the system selects assets for promotion. In one implementation, the coefficients are based on ad use, such as ad starts.

Implementations of systems and methods according to the appended claims can include one or more of the following. The coefficients may be based at least in part on ad use, ad starts, such as a number of ad starts, ad start participation, ad start participation divided by number of visits, ad start participation divided by number of visits and further divided by an associated standard deviation, a sum of ad start conversions divided by an associated standard deviation, a quotient of ad starts per visit divided by an associated standard deviation, a quotient of a number of minutes of video starts divided by an associated standard deviation, a number of minutes viewed per viewing visitor or per viewing visitor per title, a number of minutes per viewing videos start, a number of viewing video start conversions, a video start percentage lift, and so on. The method may further include calculating a performance coefficient, where the performance coefficient is equal to the coefficient added to a product of the coefficient times the video start percentage lift. The assets may correspond to audiovisual content including movies, music, television shows, software, and data files. The method may further include promoting the selected assets using at least two of: a social networking tool, a broadcast media tool, and an audiovisual filesharing site. The promoting may further include, upon selection, automatically retrieving from file storage audiovisual content pertaining to the selection, and providing the same to at least two platforms. The promoting may further include automatically populating fields or tags within the platform. The selecting assets for promotion may include selecting at least one asset to be promoted once per day on a given platform over a selected time period of days.

In another aspect, the invention is directed towards a non-transitory computer readable medium according to the claims.

In another aspect, the invention is directed towards a server-based system according to the claims.

Implementations of the systems and methods according to the appended claims can include one or more of the following. The coefficient calculating module may use at least ad starts in the calculating of the coefficient. The coefficient calculating module may use at least an ad start participation per visit in the calculating of the coefficient. The coefficient calculating module may use at least an ad start participation per visit divided by a standard deviation of a distribution of the ad start participation in the calculating of the coefficient.

Advantages of the systems and methods according to the appended claims can include, one or more of the following. It is been found that the use of advertising metrics in the ways described leads to noticeable improvements in performance of content items/assets/titles. The same allow convenient identification and promotion of "dark horse" titles, allowing quality entertainment to be discovered and revealed to viewers in a rapid and machine efficient way. Systems and methods according to present principles may be particularly useful in cyclical content distribution. In particular, in cases where at the beginning of a calendar month a supply of new titles are available, it may be fairly simple to determine what titles to promote initially (e.g., already-popular or expected-to-be-popular titles), but as time goes on, and data is accumulated, systems and methods according to present principles may allow less popular movies, but having automatically-identified significant viewer engagement, to be promoted and made more popular.

Other advantages will be understood from the description that follows, including the figures and claims.

This Summary is provided to introduce a selection of concepts in a simplified form. The concepts are further described in the Detailed Description section. Elements or steps other than those described in this Summary are possible, and no element or step is necessarily required. This Summary is not intended to identify key features or essential features of the claimed subject matter, nor is it intended for use as an aid in determining the scope of the claimed subject matter. The claimed subject matter is not limited to implementations that solve any or all disadvantages noted in any part of this disclosure.

### BRIEF DESCRIPTION OF THE DRAWINGS

Fig. 1 is a flowchart of a method according to present principles.
Fig. 2 is a detail of a step of the flowchart of Fig. 1.
Fig. 3 is a flowchart of a more detailed automated method according to present principles.

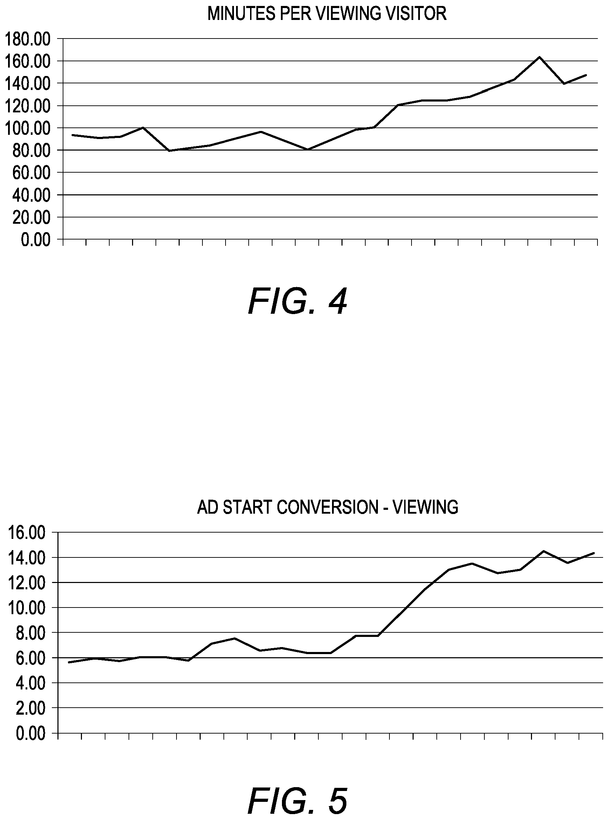

Fig. 4 is a chart showing an increase in minutes per viewing visitor using systems and methods according to present principles.
Fig. 5 is a chart showing an increase in ad start conversion using systems and methods according to present principles.
Fig. 6 is a spreadsheet illustrating exemplary blitz coefficients and performance coefficients using systems and methods according to present principles.
Fig. 7 indicates a scatter plot of performance coefficients and numbers of unique visitors.
Fig. 8 indicates an exemplary blitz promotion plan.

Like reference numerals refer to like elements throughout. Elements are not to scale unless otherwise noted.

### DETAILED DESCRIPTION

As noted above, in one implementation, a computer system evaluates the access and use of multiple assets and determines coefficients for the assets. Using the coefficients, the system selects assets for promotion. In one implementation, the coefficients are based on ad use, such as ad starts. In determining the parameters that in turn are used to determine coefficients, certain parameters are used in certain implementations, but such are generally based on consumer interaction with ads or with non-ad content. Such interactions may be measured by numbers of ads watched, "clicks" or activations of an ad, time spent viewing an ad, time spent viewing non-ad content, and so on.

Such interactions are generally only measurable using computing environments that have been specially adapted for measuring and taking account of such interactions. In the same way, the parameters associated with such interactions, and their use in determining coefficients for use by systems and methods according to present principles, are also only calculable and usable by such specially adapted computing environments. By appropriate programming, such computing environments become specially adapted for performance of the disclosed methods. Moreover, such systems and methods have been shown to effectively relate titles to consumers, particularly in the identification of "dark horse" titles, greatly reducing computing effort (computer cycles, power, and so on) required to communicate titles of interest to a consumer as compared with prior methods.

The following definitions are used in this description:
"Ad starts" or "digital in stream video ads" or "video ads" are used in a nonlimiting way and generally relate to ads that are shown as a prerequisite for watching a content item. Such are termed "ad starts" but need not occur at or prior to the start of a content item. For example, in many cases, ad starts refer to ads that are placed within a content item, e.g., at 8 to 15 minute increments, e.g., 8 to 12 minute increments, e.g., 10 minute increments. While an "ad start" refers to an individual ad, an "ad break", e.g., at 10 minute increments, may include multiple ad starts. For example, if a viewer watches three separate digital in stream video ads, this would count as three ad starts. To count as an ad start, a viewer may in some implementations be required to watch the ad for a predetermined period of time, e.g., 1 to 5 seconds, e.g., 3 seconds. In other implementations, no such waiting period is used. In many cases, ad starts occur prior to the beginning of a content item and then at predefined ad breaks within the content item. For example, if there are three ad starts per ad break and 12 ad breaks in a title, if a viewer watched the entire content item, they would view 36 ad starts, along with 3 ad starts at the beginning of the content item/title. In some cases ad starts are specified to a title, in which case the appertaining quantity is ad starts per title, which is the number of ad starts associated with a given title. This parameter may change over time according to the dictates of the designer or programmer.

"Ad start conversion" or "viewing ad start conversion" or "ad start first visit" are used in a nonlimiting way and generally relates to ad start participation divided by visits, in some cases limited to visits of visitors that viewed a content video start. As a particular example, the ad start conversion of a first title may be 7, while the ad start conversion of a second title is 4. In this case, the first title is more valuable and more appropriate to blitz as described below. "Ad start conversions" may also be used to refer to an average number of ad starts per a first visit to a content item. For example, if a viewer watches a movie for the first time and views 20 ad starts, there are 20 ad start conversions. Ad start conversions may also be calculated on the basis of a total number of views of a content item during a date range in question, and not just on the first visit

"Ad start participation" is used in a nonlimiting way and generally relates to a total number of ad starts in a time period. For example, if a viewer, in a visit, views a first content item and watches 18 ad starts, then views a second content item and watches 20 ad starts, then views a third content item and watches 10 ad starts, then the ad start participation for the first content item is 18+20+10 = 48 ad starts from that viewer. Similarly, ad start participation for the second and third content items are also 48 ad starts each, for that viewer. Put another way, ad start participation constitutes a bucket of ad starts generated from viewers viewing actual content items across their entire visits independent of title. One title may be watched, or multiple titles may be watched. A related but more detailed term is "viewing ad start participation per visit", which is ad start participation divided by number of visits, where "viewing" refers to activity by visitors who also viewed a content item (see below). A yet more detailed related term is "viewing ad start participation per visit standard deviation", which is the ad start participation per visit divided by its standard deviation, among the visits from visitors that viewed content video. Details of the consideration of standard deviation are provided below. In any case, this value is thus normalized to the number of visits, and thus represents an intrinsic measure of engagement of viewers with content items. For example, a Hollywood blockbuster may have a large number of ad starts but also a correspondingly large number of visits. A "dark horse" may enjoy a significant engagement with viewers, in the sense that viewers watch the content item for a long period of time and thus generate a large number of ad starts, but a comparatively fewer number of viewers may be associated with the "dark horse". Accordingly, the ad start participation will usually be correspondingly higher for the dark horse title, indicating its quality and viewer engagement and thus qualifying the dark horse for extra promotion, such as via a blitz promotion.

"Lift" or a "lift value" are used in a nonlimiting way and generally relate to a comparison of one of the above parameters over two different time periods. Lift values are generally expressed as percentages. For example, if a video starts in a first time period number 10 and video starts in a second time period number 15, then the percentage lift is 50%.

A "gateway" or "driver" title is used in a nonlimiting way and generally relate to a content item that leads to the consumption of other content items, even if the gateway title itself lacks a significant number of ad starts. For example, a gateway title corresponding to a movie about a group of superheroes may lead to interest in content items corresponding to other different movies about the individual superheroes within the group. Put another way, a gateway title is one with a high ad start participation divided by visits, even though its corresponding blitz coefficient may not be large compared to others. In some implementations, its blitz coefficient may have been driven down by other metrics used in the calculation, e.g., such as time spent. For example, a viewer may be watching a Superman movie, and may be enjoying the title more than others. However, the viewer may turn the movie off sooner, switching to another content item of like genre, e.g., a Superman TV series, and so on. The time spent on the movie may not be significant, but as it leads to the viewing of other content, it is an important contributing factor to higher ad starts. Determining gateway titles generally includes determining titles watched before consuming ad starts on other titles, i.e., with the gateway title as a springboard. An advantage of systems and methods according to present principles is the identification of gateway titles.

A "video start" is used in a nonlimiting way and generally relates to an occurrence of a viewer viewing a content item, i.e., title or asset. "Content stream" is a synonym for video start. A video start generally does not include video ads. For example, if a viewer watches a first title, such constitutes one video start. If they then next watch a different title, or an episode of a television show, that would constitute another video start, for a total of two video starts within one visit.

"Minutes per viewing video start" is used in a nonlimiting way and generally relates to the number of minutes a viewer views a content item, or an average of such numbers of minutes.

"Video start participation" is used in a nonlimiting way and generally relates to a number of video starts in a particular time period. For example, a viewer may watch a Superman movie which constitutes one video start. In the same visit, the viewer watches the Superman series and watches all five episodes. Video start participation is consequently 1+5 = 6. Thus, in the above example, the 2 video starts occurred during the same visit so the value of "video start participation" for that viewer is 2 video starts divided by 1 visit which equals a video start participation of 2.

"Video start conversion" or "video start first visit" are used in a nonlimiting way and generally relate to video start participation divided by number of visits. For example, if a first title has a video start conversion of 2, and a second title has a video start conversion of 4, the second title is more valuable and more appropriate to blitz than the first.

"Viewing video start conversion" is used in a nonlimiting way and generally relates to video start participation divided by visits among visits of visitors that also viewed a content video start.

A "minutes per viewing visitor" is used in a nonlimiting way and generally relates to a number of minutes a viewer has been on a video providing site per a given time period, a number of minutes a viewer has been active on a video providing site, or a number of minutes a viewer has watched content on a video providing site, regardless of the number of titles of content the viewer has viewed. Minutes per viewing visitor may be considered on a total basis (per a given time period), but also considered on a per visit basis, on a per title basis, and so on. In one implementation, "viewing visitors" only includes visits from visitors that engaged in video content, i.e., not ads, but only actual video content such as movies and shows. The same may further, in some implementations, only include unique visitors. Minutes per viewing visitor may also be defined as the average time spent per visitor across video starts, not per individual video starts.

In a specific implementation, minutes per viewing visitor may be calculated in a two-step process. First, a segment is created called "viewing visits", which is defined as a visit where the number of video starts is greater than or equal to one. In other words, during a visit engaged by a visitor, one or more content videos were initiated. Next, the viewing visits segment is overlaid over a metric defined by "total seconds spent" divided by "unique visitors". Total seconds spent is a measure of total time on the site, e.g., dwell time on the page, video ads, video starts, and so on, and the same is divided by the number of unique visitors. The result is time spent on the site among visitors who engaged in at least some content video.

A "blitz coefficient" is used in a nonlimiting way and generally relates to a formula or function based on one or more of the above parameters, as well as in certain instances other parameters. The blitz coefficient may be used to rank content items, particularly where content items are chosen for a specific marketing blitz, e.g., promotions across several platforms, e.g., site promotion, social media, newsletters, podcasts, mobile alerts, acquisition campaigns, and so on. Multiple formulas may be employed and used to determine blitz coefficients, and several are described below. Blitz coefficients may be independent of the total number of viewers, so a title with low audience but high ad start participation divided by visits is judged on the same basis as more recognized "driver" titles.

A "performance coefficient" is used in a nonlimiting way and generally relates to a value based on a formula or function based at least in part on the blitz coefficient and on a lift value. For example, in one implementation, a performance coefficient is equal to a blitz coefficient plus the blitz coefficient multiplied by a percentage lift in video starts ([performance coefficient = blitz coefficient ^{∗} (1 + % lift video starts)]). The performance coefficient allows tracking of how titles subjected to a blitz promotion are performing, including relative to other titles.

Where the above parameters are capable of being expressed as distributions, a standard deviation or other statistical measure may be calculated as to the spread of the distribution. In certain implementations, the standard deviation is divided into the quantity of interest to indicate a power or specificity of the indicated quantity. For example, a first title may have an ad start conversion of 7, and a second title may have an ad start conversion of 4. A standard deviation between these two numbers (in Excel, =stdev(7,4)) is 2.12132, and this number is thus the standard deviation for ad start conversions. 7 divided by 2.12132 is 3.3, and 4 divided by 2.12132 is 1.886. The first title, with the larger value of the ad start conversion applying the standard deviation, would be considered more valuable and more appropriate to promote or blitz. A benefit of the use of the standard deviation is that the same adjusts automatically based on the given range, as opposed to adjusting for the range manually and risking outdated calculations. Similar standard deviation calculations may be performed for video starts, video start conversions, and for other quantities of interest.

In some implementations, where the adjective "viewing" is added to a term or phrase, the same modifies the term or phrase to be specific to only visitors who have viewed content items. Put another way, for such a metric, viewers who visit a video or other content viewing site may visit without watching any content - such visitors would be excluded in "viewing" metrics.

A "visit" or a "session" are used in a nonlimiting way and generally relate to a sequence of Internet activity made by one viewer at one site prior to a period of inactivity having a predetermined duration, e.g., 30 minutes That is, if a viewer makes no request from a site during a 30 minutes period of time, the next content or ad request would then constitute the beginning of a new visit. In some cases, a visit or session may constitute a series of transactions performed by a viewer that can be tracked across successive websites. For example, in a single session, a viewer may start on a publisher's website, click on an advertisement, and then go to an advertiser's website and make a purchase. The viewer may then go back to the original website and finish viewing the content in which the original advertisement was situated. In a particular example, a viewer may watch an episode of a TV show, then leave for two hour lunch. If no activity is seen after 30 minutes, the session may be closed. If the viewer returns from lunch and watches a movie, this starts another session. One visitor can have more than one visit within any given time period.

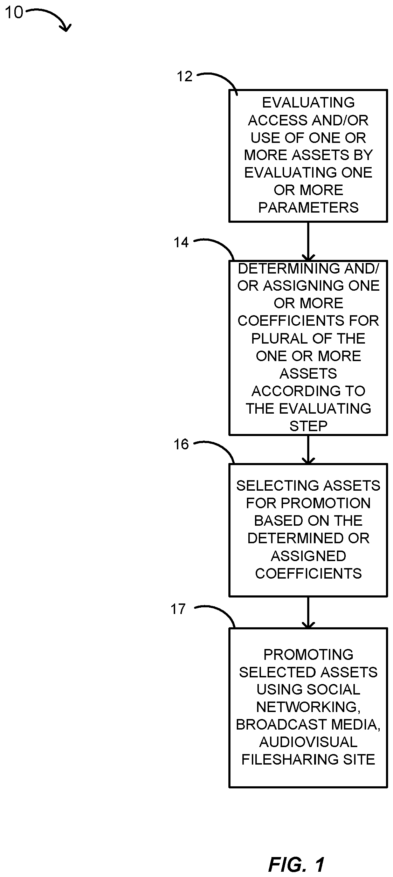

Referring to Fig. 1, a flowchart 10 indicates a general method according to present principles. In a first step, access to content items or other assets are evaluated (step 12). Such is generally evaluated by determining certain parameters associated with the assets, such as ads viewed while consuming the content. In some cases ads are associated with the content, e.g., a trailer for a sequel content item, and in many other cases ads are unassociated with the content, e.g., an ad for a car appearing during a children's movie. The parameters are described below in connection with the determination of blitz coefficients, but here it is noted that the parameters may generally include any of the parameters described above. Such parameters may also include computer measurable quantities such as time spent watching ads, time spent watching video content, or the like.

In a next step, one or more blitz coefficients are determined for one or more of the assets, according to the parameters determined in the prior step (step 14). That is, the blitz coefficients are determined by equations or formulas in which the parameters appear as variables. The equations or formulas are chosen to be of particular usefulness, having proven success rates. Such formulas are described below.

Assets may then be selected for promotion based on the determined or assigned coefficients (step 16). In some cases, a simple ranking is employed. For example, assets with the highest blitz coefficients are selected for promotion. Step 16 may be performed over a number of differently-sized time periods according to how often re-ranking is desired. For example, for a blitz to be planned over a week-long time period, step 16 may be performed at the beginning of the week, and the seven content items or assets with the highest blitz coefficients selected for promotion during the week, with one content item being promoted per day. Following the end of these blitz promotions, a new set of seven titles with the highest blitz coefficient assets may be determined. Alternatively, blitz coefficients may be determined every day, and the content item or asset with the highest blitz coefficient promoted that day. In this implementation, rules may also be employed, e.g., requiring that the same content item not be promoted on successive or adjacent days, and so on.

Once the assets are selected for promotion, a next step is to promote the selected assets in a blitz format (step 17), i.e., using multiple platforms at the same time. For example, such multiple platforms may include social networking, broadcast media, audiovisual filesharing sites, and so on.

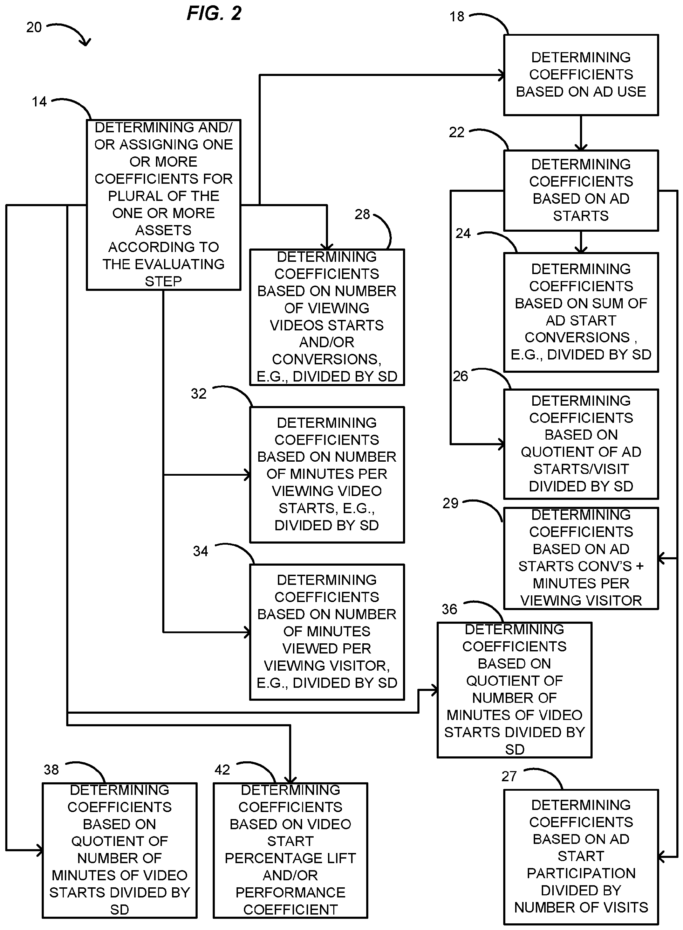

Fig. 2 is a flowchart 20 illustrating various ways of performing step 14, i.e., of determining and/or assigning one or more coefficients for the content items or assets. In one category of ways, the coefficients may be determined based on ad use (step 18), and in this category coefficients may be determined based on ad starts (step 22), e.g., on the sum of ad start conversions divided by a determined standard deviation (step 24). In another way based on ad starts, coefficients may be determined based on a quotient of ad starts per visit divided by the determined standard deviation. In yet another way based on ad starts, coefficients may be determined based on the quotient of ad participation divided by a total number of visits (step 27). In yet another way based on ad starts, coefficients may be determined based on a sum of a number of ad start conversions and a number of minutes per viewing visitor, e.g., unique visitors. It will be understood that, where not contraindicated by context, these measures and parameters may generally be calculated as a total number over a time period of interest, e.g., a week or other time period, so as to allow lift calculations.

In yet other ways of performing step 14, coefficients may be determined based on a number of viewing video starts and/or conversions (step 28), a number of minutes of video starts (step 32), or a number of minutes viewed per viewing visitor (step 34). Yet other ways include determining coefficients based on a quotient of a number of minutes of video starts divided by a standard deviation (step 38). Still other ways include determining coefficients based on a video start percentage lift and/or a performance coefficient (step 42).

Other ways of performing step 14, determining coefficients, i.e., blitz coefficients, will also be understood to one of ordinary skill in the art given this teaching. For example, linear or nonlinear combinations of the parameters or variables described above may be used.

In other particular implementations, e.g., blitz coefficients may be determined in the following manner.
I. Blitz coefficient = viewing ad start participation / visit, then a standard deviation is calculated, and then the calculated viewing ad start participation /visit is divided by the calculated standard deviation
II. Blitz coefficient = ad start participation / # visits

It may be particularly advantageous to have blitz coefficients be independent of the size of the audience visiting each title. In this way, so-called "dark horse" titles may be identified, which may have little or no promotion, but which audiences may find highly engaging. In this way, audiences may find titles of interest in a much faster fashion than in prior efforts, significantly reducing the amount of technological activity required by the viewer (and by the computing environment) in finding and consuming titles of interest.

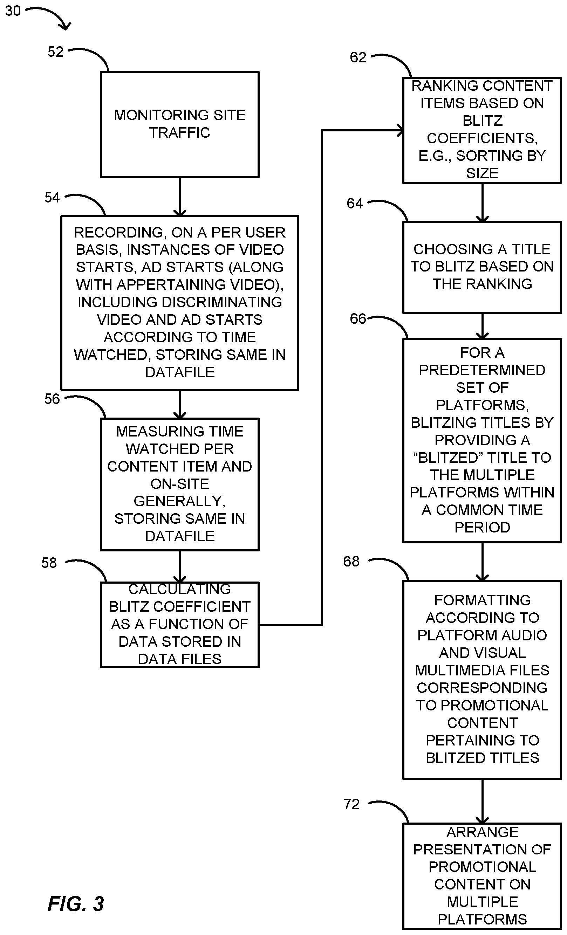

The flowchart 30 of Fig. 3 illustrates a more detailed and automated way of monitoring site traffic to result in automatically selected and promoted titles. A first step is to monitor site traffic (step 52). A subsequent step is to record instances of various types of activity occurring on the site (step 54). Generally this involves recording, for a given viewer, instances of activities such as video starts, ad starts, and so on. Such activity is stored in a data file for subsequent use in calculations. Ad starts are generally associated with their appertaining video (i.e., content item or asset) to allow calculation of ad start participation and other such parameters for a title. This step may also include discrimination of activity to determine if it should count as a ad start or video start. For example, watching an ad for a predetermined minimum amount of time may be required to allow the ad watching to count as an ad start. Such a time period may be between, e.g., 1 in 10 seconds, e.g., between 1 and 5 seconds, e.g., 3 seconds, and the like.

Other parameters monitored or measured may include the amount of time a content item is watched, or how much time a visitor is on the site (step 56). More granular measurements may include the amount of time a viewer spends watching content versus being on the site generally, the amount of time a viewer spends watching ads, and so on. Such data may also be stored in the same or a different data file.

A next step is that a blitz coefficient may be calculated as a function of the data stored in the data files (step 58). The calculation may include any of the equations, formulas, or functions described above, but a general desire is to uncover or reveal titles that have significant viewer engagement but do not necessarily enjoy initial consumer popularity. Such may often be termed "dark horses," as compared to "Hollywood blockbusters".

After determination or calculation of the coefficients, a ranking or other prioritization scheme may be employed to determine content items or assets of interest (step 62). Where the coefficients have been appropriately defined, such may simply include sorting the coefficients by size.

From the ranking step, a title may be chosen to be "blitzed" (step 64). In a simple example, the title at the top of the ranking is chosen to be blitzed. Alternatively, e.g., the top seven ranked titles may be selected for subsequent daily promotions/blitzing, one on each day over the course of a week.

The titles chosen to be blitzed may then be provided to one or more of multiple platforms to actually perform the "blitz" (step 66). This step may be performed automatically, particularly in cases where the ranking rules lead to automatically - determinable titles for blitzing. Where promotional materials, e.g., multimedia files corresponding to trailers, offers, ads, and so on, are used for blitzing, such promotional materials may be automatically retrieved from data file storage and transmitted to the multiple platforms for display, e.g., automatically populating required tags or fields for a respective platform according to the platform's API. In this way presentation and display of the promotional materials may be arranged in an automatic fashion (step 72). Windows may then be automatically sized for artwork retrieved from storage, and the same may form the basis for the blitz promotion.

### Example

Systems and methods described above have been implemented and found particularly useful in the promotion of content items. In one such implementation, a number of content items, e.g., movies, television shows, or the like, become available at the beginning of each month. The blitz methodology is employed to determine which of the content items to promote. When promoted, the same are generally promoted across multiple platforms at the same time (or generally within the same time period).

In one implementation, the blitz methodology may not be employed during the first week, as there may not be sufficient data to identify which content item should be promoted. Instead, well-known or popular content items may be promoted, still as part of a blitz, i.e., across multiple platforms, but without using the calculation of blitz coefficients to rank or prioritize the same. In subsequent weeks, once data useful in such calculations are obtained or measured and received, blitz coefficients may be calculated using received data and the same employed in ranking or prioritization in order to determine which titles or content items to promote. Such may include consideration of lift, and the lift percentage may be calculated by comparing two time periods. For example, on the 23rd day of the month, a first time period may be considered as days 1-11, and a second time period as days 12 - 22. A percentage lift may be calculated between the two sets of time periods, and such may be employed to determine what should be promoted on the 23rd day, or on the week starting on the 23rd day, and so on. In another example, a first set of days may be days 1-4, and the second set days 5-8. In a particular example, a ranking or prioritization may be calculated, and the top seven titles used as indicators of titles to promote during the following week, one per day. In another example, the ranking or prioritization may be calculated every day, and the subsequent top ranked title selected for promotion.

For example, in one specific implementation, ad start conversion was found to increase by 4.7 ad starts to 14.1 ad starts, which in this case was a +83% increase. In the same way, in the measure of minutes per viewing visitor, the same was seen to increase 25.7 minutes to 145.7 minutes, a +44% increase.

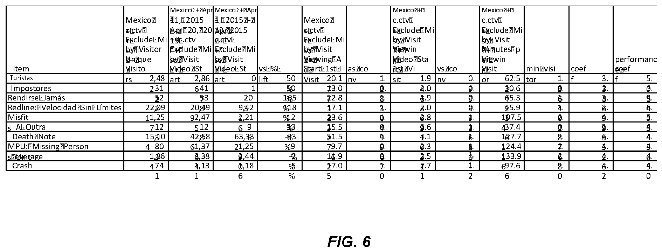

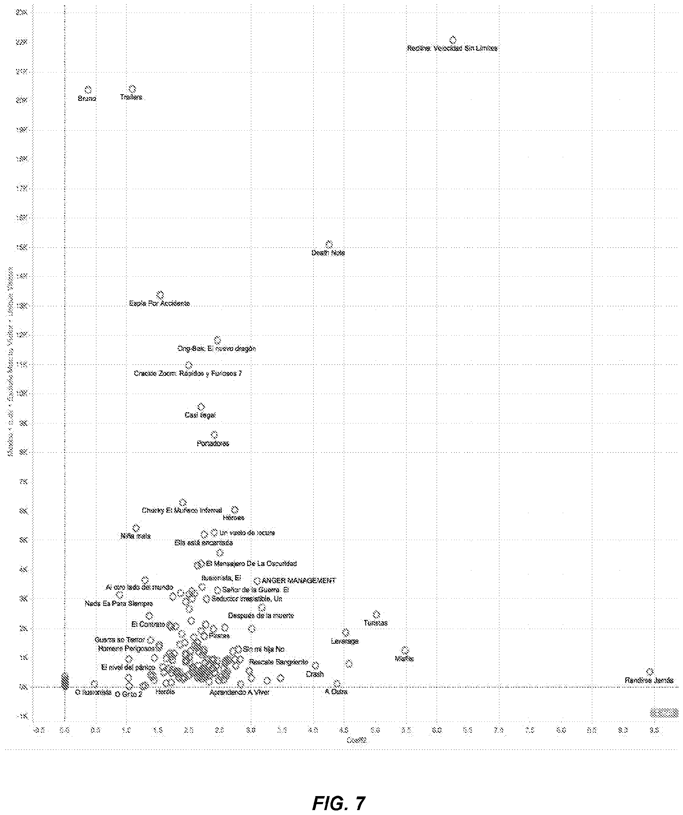

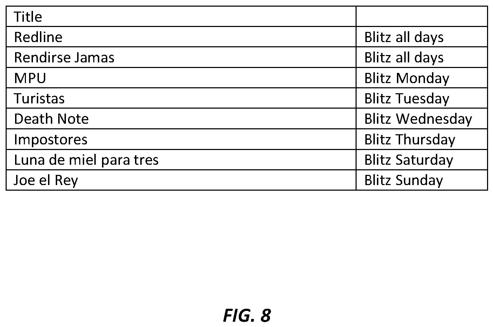

This exemplary implementation also included other features. For example, the top two titles, in terms of number of unique visitors, were always the subject of a blitz promotion every day. After the first blitz of the month, a calculation was made of the lift of video starts by dividing the number of days in the month as described above. Also calculated were viewing ad start conversion, viewing video start conversion, and minutes per viewing visitor. In the exemplary implementation, blitz coefficient calculations include a minimum number of unique visitors in order to warrant the calculation of a coefficient. For example, titles were removed if the number of unique visitors was less than a predetermined number, e.g., 40. Standard deviations were calculated for the number of ad starts, the video start conversion parameter, and the minutes per viewing visitor parameter. The calculated standard deviations were divided into these respective parameters as described above. In one implementation, the blitz coefficient was calculated as the sum of the calculated quantities, e.g., ad start conversions, video start conversions, and minutes per viewing visitor. A blitz performance coefficient was calculated by multiplying the blitz coefficient by (1 + % lift). Results may be seen in Fig. 6. A scatter plot is shown in Fig. 7, which indicates performance coefficient on the x-axis and a number of unique visitors per title on the y-axis. Fig. 8 indicates an exemplary blitz promotion plan.

What has been described are systems and methods for prioritizing and promoting content including assets such as movies and television shows. Additional variations and implementations are also possible. For example, the system can be used for various other types of assets, such as music, software, video games, data files (text, research), etc. In addition, systems can be implemented to support various types of promotion, such as across the Internet, using social networking tools, using broadcast media (television, radio), etc. Thus, while the term "viewer" has been used above, in some cases the same may be replaced with "user", "consumer", "listener", and so on.

Systems and methods according to present principles may be described modularly as well, such as with a module to determine ad starts, a module for calculating a blitz coefficient, a module for determining a performance coefficient, a module for promoting a content item, a blitz module to coordinate promotions across several promotions modules, and so on.

One implementation includes one or more programmable processors and corresponding computer system components to store and execute computer instructions, such as to provide the evaluation of assets and determinations of coefficients. The system and method may be fully implemented in any number of computing devices. Typically, instructions are laid out on computer readable media, generally non-transitory, and these instructions are sufficient to allow a processor in the computing device to implement the method of the invention. The computer readable medium may be a hard drive or solid state storage having instructions that, when run, are loaded into random access memory. Inputs to the application, e.g., from the plurality of viewers or from any one viewer, may be by any number of appropriate computer input devices. For example, viewers may employ a keyboard, mouse, touchscreen, joystick, trackpad, other pointing device, or any other such computer input device to input data relevant to the calculations. Data may also be input by way of an inserted memory chip, hard drive, flash drives, flash memory, optical media, magnetic media, or any other type of file - storing medium. The outputs may be delivered to a viewer by way of a video graphics card or integrated graphics chipset coupled to a display that maybe seen by a viewer. Alternatively, a printer may be employed to output hard copies of the results. Given this teaching, any number of other tangible outputs will also be understood to be contemplated by the invention. For example, outputs may be stored on a memory chip, hard drive, flash drives, flash memory, optical media, magnetic media, or any other type of output. It should also be noted that the invention may be implemented on any number of different types of computing devices, e.g., personal computers, laptop computers, notebook computers, net book computers, handheld computers, personal digital assistants, mobile phones, smart phones, tablet computers, and also on devices specifically designed for these purpose. In one implementation, a viewer of a smart phone or wi-fi - connected device downloads a copy of the application to their device from a server using a wireless Internet connection. An appropriate authentication procedure and secure transaction process may provide for payment to be made to the seller. The application may download over the mobile connection, or over the WiFi or other wireless network connection. The application may then be run by the viewer. Such a networked system may provide a suitable computing environment for an implementation in which a plurality of viewers provide separate inputs to the system and method. In the above system where coefficients are calculated and used in content promotion, the plural inputs may allow plural viewers to input relevant data at the same time.

## Claims

1. A method for selecting assets corresponding to audiovisual content items for promotion, comprising:
a. evaluating (12) access and use of a plurality of assets corresponding to audiovisual content items, the evaluating including determining, for each one of the plurality of assets, values of parameters by evaluating viewing of the asset and viewing of ads provided by a video sharing site along with the viewed assets, the evaluation providing a value for each of the parameters for each asset,
b. determining a standard deviation of the values of one of the parameters by using the value of a same parameter for each of the plurality of assets to calculate the standard deviation of the values for that parameter,
c. determining, based on the value of the parameters, one or more coefficients for each of the plurality of assets, the determining including, for each asset, dividing the value of the same parameter for which the standard deviation was determined for the respective asset, by the determined standard deviation; and
d. selecting (16) from the plurality of assets, one or more assets for promotion based on a ranking of the determined coefficients.

2. The method of claim 1, further comprising promoting (17) the selected assets using at least two platforms selected from: a social networking tool, a broadcast media tool, and an audiovisual file sharing site.

3. The method of claim 2, wherein the promoting further comprises, upon selection, automatically retrieving from file storage audiovisual content pertaining to the selection, and providing the same to the at least two platforms.

4. The method of claim 3, wherein the promoting further comprises automatically populating fields or tags within each platform according to an API of the platform.

5. The method of claim 1, wherein the selecting the one or more assets for promotion includes selecting at least one asset to be promoted once per day on a given platform over a selected time period of days.

6. A non-transitory computer readable medium, comprising instructions for causing a computing environment to perform the method of claim 1.

7. A computer system for selecting assets corresponding to audiovisual content items for promotion configured to perform the method of claim 1.

## Patentansprüche

1. Verfahren zum Auswählen von Posten, die audiovisuellen Inhaltselementen entsprechen, für eine Förderung, das Folgendes umfasst:
a. Beurteilen (12) eines Zugriffs und einer Verwendung mehrerer Posten, die audiovisuellen Inhaltselementen entsprechen, wobei das Beurteilen enthält, für jeden der mehreren Posten Parameterwerte durch Beurteilen einer Betrachtung des Postens und einer Betrachtung von Anzeigen, die durch einen Netzstandort für eine gemeinsame Nutzung von Videos zusammen mit den betrachteten Posten geliefert werden, zu bestimmen, wobei die Beurteilung einen Wert für jeden der Parameter für jeden Posten liefert,
b. Bestimmen einer Standardabweichung der Werte eines der Parameter durch Verwenden des Werts desselben Parameters für jeden der mehreren Posten, um die Standardabweichung der Werte für diesen Parameter zu berechnen,
c. Bestimmen anhand des Parameterwerts eines oder mehrerer Koeffizienten für jeden der mehreren Posten, wobei das Bestimmen enthält, für jeden Posten den Wert desselben Parameters, für den die Standardabweichung für den jeweiligen Posten bestimmt wurde, durch die bestimmte Standardabweichung zu teilen; und
d. Auswählen (16) aus den mehreren Posten eines oder mehrerer Posten für eine Förderung anhand einer Rangordnung der bestimmten Koeffizienten.

2. Verfahren nach Anspruch 1, das ferner umfasst, die ausgewählten Posten unter Verwendung mindestens zweier Plattformen zu fördern (17), die ausgewählt sind aus: einem Werkzeug sozialer Netze, einem Sendungsmedienwerkzeug und einem Netzstandort für die gemeinsame Nutzung audiovisueller Dateien.

3. Verfahren nach Anspruch 2, wobei das Fördern ferner umfasst, bei der Auswahl aus einem Datenspeicher automatisch audiovisuellen Inhalt zu erfassen, der sich auf die Auswahl bezieht, und denselben an die mindestens zwei Plattformen zu liefern.

4. Verfahren nach Anspruch 3, wobei das Fördern ferner umfasst, Felder oder Markierungen innerhalb jeder Plattform gemäß einer API der Plattform automatisch zu bestücken.

5. Verfahren nach Anspruch 1, wobei das Auswählen des einen oder der mehreren Posten für eine Förderung enthält, mindestens zwei Posten auszuwählen, die einmal pro Tag auf einer gegebenen Plattform über eine ausgewählte Zeitperiode von Tagen zu fördern sind.

6. Nicht transitorisches computerlesbares Medium, das Anweisungen umfasst, um zu bewirken, dass eine Rechenumgebung das Verfahren nach Anspruch 1 ausführt.

7. Computersystem zum Auswählen von Posten, die audiovisuellen Inhaltselementen entsprechen, für eine Förderung, das konfiguriert ist, das Verfahren nach Anspruch 1 auszuführen.

## Revendications

1. Procédé de sélection de biens correspondant à des éléments de contenu audiovisuel en vue de leur promotion, comprenant :
a. l'évaluation (12) de l'accès et de l'utilisation d'une pluralité de biens correspondant à des éléments de contenu audiovisuel, l'évaluation comportant la détermination, pour chacun de la pluralité de biens, de valeurs de paramètres par évaluation du visionnage du bien et du visionnage d'annonces publicitaires fournies par un site de partage de vidéos conjointement avec les biens visionnés, l'évaluation fournissant une valeur pour chacun des paramètres pour chaque bien,
b. la détermination d'un écart-type des valeurs d'un des paramètres au moyen de la valeur d'un même paramètre pour chacun de la pluralité de biens afin de calculer l'écart-type des valeurs pour ce paramètre,
c. la détermination, sur la base de la valeur des paramètres, d'un ou de plusieurs coefficients pour chacun de la pluralité de biens, la détermination comportant, pour chaque bien, la division de la valeur du même paramètre pour lequel l'écart-type a été déterminé pour le bien respectif par l'écart-type déterminé ; et
d. la sélection (16), parmi la pluralité de biens, d'un ou plusieurs biens en vue de leur promotion sur la base d'un classement des coefficients déterminés.

2. Procédé selon la revendication 1, comprenant en outre la promotion (17) des biens sélectionnés au moyen d'au moins deux plateformes sélectionnées parmi : un outil de réseautage social, un outil de médias de diffusion et un site de partage de fichiers audiovisuels.

3. Procédé selon la revendication 2, dans lequel la promotion comprend en outre, dès la sélection, la récupération automatique, à partir d'un stockage de fichiers, d'un contenu audiovisuel relatif à la sélection, et sa fourniture aux au moins deux plateformes.

4. Procédé selon la revendication 3, dans lequel la promotion comprend en outre le peuplement automatique de champs ou d'étiquettes au sein de chaque plateforme selon une API de la plateforme.

5. Procédé selon la revendication 1, dans lequel la sélection des un ou plusieurs biens en vue de leur promotion comporte la sélection d'au moins un bien à promouvoir une fois par jour sur une plateforme donnée en l'espace d'une période de temps sélectionnée de plusieurs jours.

6. Support non transitoire lisible par ordinateur, comprenant des instructions destinées à amener un environnement informatique à réaliser le procédé selon la revendication 1.

7. Système ordinateur pour la sélection de biens correspondant à des éléments de contenu audiovisuel en vue de leur promotion, configuré pour réaliser le procédé selon la revendication 1.
